# EUROPEAN PATENT APPLICATION

(11) **EP 4 385 835 A1**
(43) Date of publication of application: **19.06.2024**
(21) Application number: 23215881.6
(22) Date of filing: 12.12.2023
(51) Int. Cl.: B60R 22/48

(54) **RESTRAINT PAYOUT AND POSITION DETECTION**

(30) Priority: 14.12.2022 US 202263387366 P; 30.11.2023 US 202318524460
(71) Applicant: Apple Inc., Cupertino, CA 95014 (US)
(72) Inventor: SEWELL, Jeffrey A., Wyandotte (US); KWONG, Joyce Y., Sunnyvale (US); SOHNEN, Julia M., Sunnyvale (US); DENNIS, Nathaniel J., Saratoga (US); COSTA, Paul J., Cupertino, 95014 (US); MAHR, Scott R., Somers (US)
(74) Representative: COPA Copenhagen Patents

(57) **Abstract**

A restraint system includes an infrared source (130) is configured to transmit infrared waves. The system also includes restraint (110) comprising a material (113) that reflects infrared waves. An infrared receiver (132) is configured to receive infrared waves reflected from the material.

## Description

### CROSS-REFERENCE TO RELATED APPLICATIONS

This application claims the benefit of United States Provisional Application No. 63/387,366, filed on December 14, 2022, the contents of which are hereby incorporated by reference in their entirety for all purposes.

### FIELD

The present disclosure relates generally to the field of detecting an object.

### BACKGROUND

An object can be secured. In some instances, the object is secured improperly, such as by improper use of a securing device.

### SUMMARY

One aspect of the disclosure is a restraint system for a vehicle that includes a restraint comprising a material that reflects infrared waves that are transmitted from an infrared source and is received by an infrared receiver. A payout and a position of the restraint is determined based on the infrared waves reflected from the material of the restraint.

Another aspect of the disclosure is a restraint detection system that includes an infrared illumination source positioned in an interior space of a vehicle and is configured to illuminate the interior space with infrared waves. A camera is configured to receive infrared waves reflected from an infrared reflective material located within the interior space, and the infrared waves are received by the camera as an actual reflected wave pattern. A payout and a position of the restraint is determined based on the actual reflected wave pattern.

Yet another aspect of the disclosure is a vehicle that includes a vehicle body that defines a cabin. A restraint is coupled to the vehicle body and is configured to restrain an occupant within the cabin. The restraint also includes an infrared reflective material oriented in a predetermined pattern. An infrared source is coupled to the vehicle body and is positioned within the cabin to illuminate the cabin with infrared waves. An infrared receiver is coupled to the vehicle body and is positioned within the cabin to receive reflected infrared waves from the infrared reflective material of the restraint. A position of the restraint is determined based on the infrared waves reflected from the infrared reflective material.

### BRIEF DESCRIPTION OF THE DRAWINGS

FIG. 1A is a schematic front view illustration of a seat for a vehicle, according to an implementation.
FIG. 1B is an illustration of a pattern of infrared reflective material on webbing of a restraint in the vehicle of FIG. 1, according to an implementation.
FIG. 2 is a schematic block diagram of a sensor device, according to an implementation.
FIG. 3 is a schematic block diagram of a controller, according to an implementation.
FIG. 4 is a flowchart of a method for detecting motion and location of a restraint, according to an implementation.
FIG. 5 is an illustration of a display of the vehicle, according to an implementation.

### DETAILED DESCRIPTION

The disclosure herein relates to devices, systems, and methods that can detect whether a restraint is being misused by an occupant in a vehicle. Detecting whether a restraint is being misused can be accomplished using one or more sensors to detect and determine a position and a payout of the restraint relative to a body position of the occupant.

Embodiments disclosed herein include a restraint system that includes an infrared source and an infrared receiver, both positioned in a cabin of the vehicle. The infrared waves emitted from the infrared source may reflect off the restraint, and the reflected infrared waves may be received by the infrared receiver. A controller may be configured to determine an actual payout and an actual position of the restraint based on the reflected infrared waves. The controller may also be configured to determine whether the restraint is being misused based on a comparison between the actual payout and position of the restraint and an expected payout and expected position of the restraint.

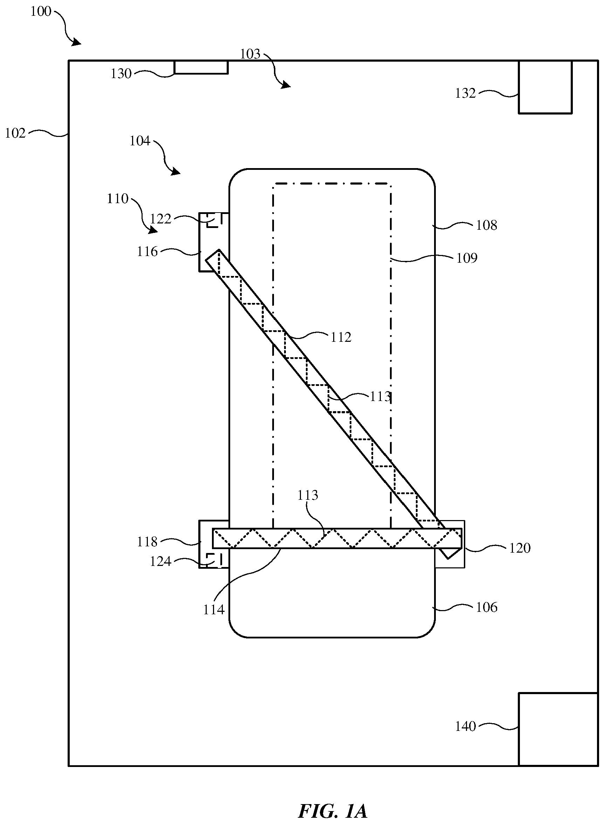

FIG. 1A is a schematic front view illustration of a seat 104 for a vehicle 100, according to an implementation. The vehicle 100 can be any type of vehicle including, but not limited to, gas or diesel-powered vehicles, electric vehicles, boat or marine vehicles, aircraft (e.g., airplanes, helicopters, etc.), remote-controlled vehicles, etc. The vehicle 100 may be configured using wheels, tracks, treads, fans, propellers, etc.

The vehicle 100 includes a vehicle body 102 that defines and at least partially encloses a cabin 103 (e.g., an interior space of the vehicle 100). The cabin 103 is the area inside the vehicle 100 which is occupied by an occupant 109 when the vehicle 100 moves from one location to another location. The cabin 103 includes the seat 104 that is fixed (either directly or indirectly) to a floor of the cabin 103. The seat 104 is shown to include a seat base 106 and a seat back 108. The seat base 106 is configured to support the lower portion (e.g., legs) of the occupant 109, and the seat back 108 is configured to support the upper portion (e.g., back, arms, head, etc.) of the occupant 109.

To secure the occupant 109 to the seat 104, a restraint 110 is coupled to the vehicle body 102, is located with the cabin 103, and is configured to restrain the occupant 109 within the cabin 103. In some implementations, the restraint 110 may be coupled to the seat 104 (e.g., the restraint 110 is coupled to the vehicle body 102 via the seat 104). The restraint 110 includes a first webbing 112 (e.g., a first webbing strap) and a second webbing 114 (e.g., a second webbing strap). In some implementations, the first webbing 112 and the second webbing 114 are a unitary component (e.g., first and second portions of a single webbing strap). The first webbing 112 and the second webbing 114 may also be separate webbings. The first webbing 112 is coupled to a first retractor 116 that is configured to automatically retract the first webbing 112. The second webbing 114 is coupled to a second retractor 118 that is configured to automatically retract the second webbing 114. In implementations where the first webbing 112 and the second webbing 114 are a unitary component, only one of the first retractor 116 and the second retractor 118 may be implemented.

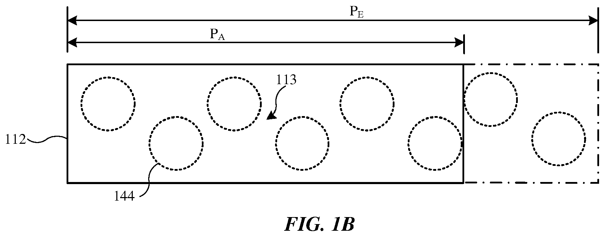

In some implementations, the restraint 110 includes an infrared reflective material 113. The infrared reflective material 113 may be oriented in a predetermined pattern and is configured to reflect infrared waves. The infrared reflective material 113 may be woven into the material of the restraint 110 (e.g., nylon). In some embodiments, the infrared reflective material 113 may be oriented in a repeating geometric pattern. As shown in FIG. 1, the infrared reflective material 113 is woven in a zig-zag pattern into the material of the restraint 110. The infrared reflective material 113 may also be arranged as a series of geometric shapes that extend along a length of the first webbing 112 and the second webbing 114. More specifically, the infrared reflective material 113 may be arranged as a series of squares, circles, ellipses, waves, or any other geometric shapes. In some implementations, each of the geometric shapes includes the same dimensions (e.g., length and width) such that a length of the first webbing 112 and/or the second webbing 114 may be calculated based on a repeating pattern of geometric shapes, where each of the geometric shapes has an expected length. In some implementations, the infrared reflective material 113 is woven into the material of the restraint 110 in a first pattern and a second pattern, where the second pattern is different that the first pattern. In some embodiments, the infrared reflective material 113 is arranged such that the first pattern may form a payout indicating pattern and the second pattern may form a position indicating pattern such that the first pattern may be used to determine the payout of the restraint 110 and the second pattern may be used to determine the position of the restraint 110.

In some implementations, the predetermined pattern of the infrared reflective material 113 varies along the length of the restraint 110. For example, the predetermined pattern may include sets of geometric shapes that are arranged on or embedded in the restraint 110 such that the order of the geometric shapes in each set is different from the order of the geometric shapes in any other set. As a more specific example, the set of geometric shapes may include five different shapes such that there would be one hundred twenty different ways to arrange the five shapes without repeating the order of shapes in any of the sets.

The restraint 110 may also include one or more latches configured to interface with the buckle 120 to secure the restraint 110 and prevent the first webbing 112 and the second webbing 114 from being retracted by the first retractor 116 and the second retractor 118, respectively. In implementations where the first webbing 112 and the second webbing 114 are separate components, each of the first webbing 112 and the second webbing 114 may include a latch that is configured to interface with the buckle 120. In implementations where the first webbing 112 and the second webbing 114 are a unitary component, one latch may be used to interface with the buckle 120. In some embodiments, the buckle 120 may include a sensor configured to generate a signal indicative of the one or more latches being secured to the buckle 120.

The first retractor 116 may include a first payout sensor 122, and the second retractor 118 may include a second payout sensor 124. The first payout sensor 122 is configured to generate a first payout signal indicative of a payout of the first webbing 112 (e.g., a length of the first webbing 112 that is extended from the first retractor 116) of the restraint 110. The second payout sensor 124 is configured to generate a second payout signal indicative of a payout of the second webbing 114 of the restraint 110 (e.g., a length of the second webbing 114 that is extended from the second retractor 118). In implementations where the first webbing 112 and the second webbing 114 are a unitary component, only one of the first payout sensor 122 and the second payout sensor 124 may be implemented.

An infrared illumination source 130 (e.g., an infrared source) is coupled to the vehicle body 102 and is positioned in the cabin 103 (e.g., the interior space of the vehicle 100). The infrared illumination source 130 may be configured to transmit infrared waves throughout the cabin 103 such that the infrared illumination source 130 illuminates the cabin 103 with infrared waves. The infrared waves may also illuminate various structures and/or occupants (e.g., the occupant 109 and/or additional occupants) in the cabin 103. The infrared illumination source 130 may also be configured to transmit infrared waves to selected portions of the cabin 103. For example, the infrared waves may be directed toward the restraint 110 to illuminate the restraint 110 without illuminating other portions of the cabin 103.

An infrared receiver 132 is coupled to the vehicle body 102 and is positioned in the cabin 103. In some implementations, the infrared receiver 132 is an infrared camera. The infrared receiver 132 is configured to receive infrared waves reflected from surfaces in the cabin 103. In some embodiments, the infrared receiver 132 is configured to receive infrared waves reflected from selected surfaces in the cabin 103. For example, the infrared receiver 132 is configured to receive infrared waves reflected from the infrared reflective material 113 of the restraint 110 without receiving infrared waves reflected from other surfaces in the cabin 103. As shown, the infrared illumination source 130 and the infrared receiver 132 may be separate components. In some embodiments, the infrared illumination source 130 and the infrared receiver 132 may be included in a single component that both transmits and receives infrared waves. The vehicle 100 may include one infrared illumination source 130 that is configured to illuminate each restraint 110 located in the cabin 103 (e.g., there may be four restraints 110 in the cabin 103, and the infrared illumination source 130 may illuminate each of the four restraints 110). In some embodiments, there may be an infrared illumination source 130 for each restraint 110 located in the cabin 103 (e.g., if there are four restraints 110 in the cabin 103, there may be four infrared illumination sources 130 where each of the illumination sources 130 is dedicated to one of the restraints 110). The vehicle 100 may also include one infrared receiver 132 that is configured to receive the infrared waves from each restraint 110 located in the cabin 103 (e.g., there may be four restraints 110 in the cabin 103, and the infrared receiver 132 may receive infrared waves reflected from each of the four restraints 110). In some implementations, there may be an infrared receiver 132 for each restraint 110 located in the cabin 103 (e.g., if there are four restraints 110 in the cabin 103, there may be four infrared receivers 132 where each of the infrared receivers 132 is dedicated to receiving infrared waves from one of the restraints 110).

The vehicle 100 further includes a controller 140 that is in communication with the infrared receiver 132 and is configured to determine a payout and a position of the restraint 110 based on the infrared waves reflected from the infrared reflective material 113 of the restraint 110. In some implementations, the infrared waves reflected from the infrared reflective material 113 is received by the infrared camera (e.g., the infrared receiver 132) as an actual reflected wave pattern. In some implementations, the actual reflected wave pattern may indicate the actual position and the actual payout of the restraint 110. The controller 140 may be configured to compare the actual reflected wave pattern to an expected reflected wave pattern to determine the payout and the position of the restraint 110, where the expected reflected wave pattern indicates the expected position and expected payout of the restraint 110. For example, the controller 140 may be configured to compare the actual reflected wave pattern to the predetermined pattern of the infrared reflective material 113. Based on the comparison, the controller 140 may determine an actual payout of the restraint 110. More specifically, the controller 140 may receive a signal from the infrared receiver 132 that is indicative of, for example, the first ten shapes of the predetermined pattern. The controller 140 may then determine, based on the predetermined length of the first ten shapes of the predetermined pattern, the actual payout of the restraint 110 (e.g., an actual payout of the first webbing 112 and the second webbing 114). In some implementations, the shapes of the predetermined pattern may be repeating (e.g., a group of repeating shapes) or identical (e.g., each shape is identical to the other shapes).

In some implementations, the controller 140 may also be configured to determine the body position of the occupant 109 based on the infrared waves that may be reflected from the occupant 109. For example, the controller 140 may be configured to determine a body position of the occupant 109 relative to the seat 104. More specifically, the controller 140 may be configured to determine whether the body position of the occupant 109 indicates that the occupant 109 is seated in a position consistent with correct use of the restraint 110 (e.g., seated with the back of the occupant 109 against the seat 104) or a position that is consistent with incorrect use of the restraint 110 (e.g., seated sideways on the seat 104 such that the back of the occupant 109 is approximately perpendicular to the seat 104). Based on the body position of the occupant 109 and the position of the restraint 110, the controller 140 may be configured to determine whether the occupant 109 is misusing the restraint 110.

FIG. 1B is an illustration of a pattern of the infrared reflective material 113 on the first webbing 112. As shown, the infrared reflective material 113 may include a circle 144 formed of the infrared reflective material 113, where the circle 144 is repeated in a pattern along the length of the first webbing 112. Based on a size of the circle 144, the controller 140 may determine the actual or expected payout of the first webbing 112. For example, each circle 144 is the same size such that, based on the size of each circle 144 and the total number of circles 144, the controller 140 may determine the actual or expected payout of the first webbing 112. In some instances, the actual payout is different than the expected payout. As shown, the controller 140 may determine that the expected payout, P_{E}, is a repeating pattern of an expected length based on the number of circles 144 that are expected. In FIG. 1B, P_{E} is based on 8 circles 144. However, the infrared receiver 132 may receive waves reflected from fewer circles 144 than expected (e.g., in the example shown, the infrared receiver 132 receives waves from only 6 of the circles 144), indicating that P_{A} is less than P_{E}.

Returning to FIG. 1, the controller 140 may also be in communication with the first payout sensor 122 and the second payout sensor 124 and may be configured to determine an expected payout based on the signals generated by the first payout sensor 122 and the second payout sensor 124. For example, the controller 140 may receive the first payout signal and the second payout signal from the first payout sensor 122 and the second payout sensor 124, respectively. The first payout signal may indicate that a first expected payout of the first webbing 112 is a first length, and the second payout signal may indicate that a second expected payout of the second webbing 114 is a second length. Based on the first expected payout and the second expected payout, the controller 140 may determine a first expected payout reflection pattern and a second expected payout reflection pattern that are based on the pattern of the infrared reflective material 113 of the restraint 110. The controller 140 may be configured to determine a first actual payout reflection pattern based on infrared waves reflected off of the first webbing 112 and received by the infrared receiver 132. The controller 140 may also be configured to determine a second actual payout reflection pattern based on infrared waves reflected off of the second webbing 114 and received by the infrared receiver 132. The first actual payout reflection pattern is indicative of the first actual payout, and the second actual payout reflection pattern is indicative of the second actual payout. In some implementations, the controller 140 is configured to determine a difference between the expected payout reflection pattern from the restraint 110 and the actual payout reflection pattern from the restraint 110. The controller 140 may also be configured to compare the expected payout of the restraint 110 (e.g., the first webbing 112 and the second webbing 114) with the actual payout of the restraint 110. In some implementations, the controller 140 makes a discrete comparison (e.g., at a distinct point in time). The controller 140 may also be configured to make the comparison over time. For example, the controller 140 may compare the expected payout of the restraint 110 with the actual payout of the restraint 110 at multiple predetermined points in time to determine whether the restraint 110 is being misused. In some embodiments, a difference (e.g., a difference between the expected payout reflection pattern and the actual payout reflection pattern, or a difference between the expected payout and the actual payout) that is greater than a threshold value may indicate that the restraint 110 is being misused by the occupant 109. For example, the first and/or second expected payout reflection pattern may be a pattern (e.g., a repeating or non-repeating pattern) of an expected length. If the controller 140 determines that the pattern indicates a length that is different from the expected length by, for example, more than five percent, ten percent, etc., the controller 140 may determine that the restraint 110 is being misused. As another example, the expected payout may be a certain length based on the expected payout reflection pattern. If the controller 140 determines that the actual length, which is based on the actual payout reflection pattern, is different from the expected payout by, for example, more than five percent, ten percent, etc., the controller 140 may determine that the restraint 110 is being misused.

Misuse of the restraint 110 may include instances where the occupant 109 does not latch the restraint 110 to the buckle 120 or latches the restraint 110 to a buckle intended for a different restraint. Misuse of the restraint 110 may also include mispositioning the restraint 110, wearing the restraint 110 incorrectly, not wearing the restraint 110 at all, etc. For example, the occupant 109 may wrap the first webbing 112 behind the seat back 108, place the first webbing 112 between the occupant 109 and the seat back 108, wrap the first webbing 112 around a headrest, etc. The occupant 109 may also place the second webbing 114 between the occupant 109 and the seat base 106, wrap the second webbing 114 around the seat back 108, etc.

Based on the first expected payout and the second expected payout, the controller 140 may determine a first expected position reflection pattern and a second expected position reflection pattern from the restraint 110. For example, the first expected payout and the second expected payout are associated with lengths of the restraint 110 that are exposed to infrared waves from the infrared illumination source 130. Accordingly, the controller 140 is configured to determine the infrared reflection pattern that should be received by the infrared receiver 132 (e.g., the expected position reflection pattern) based on the first expected payout and the second expected payout. The first expected position reflection pattern and the second expected position reflection pattern may correspond to instances where the occupant 109 wears the restraint 110 correctly (e.g., the occupant 109 does not misuse or misposition the restraint 110). As an example, the first expected payout and the second expected payout may be associated with a certain size and/or shape of the occupant 109. More specifically, a relatively longer first expected payout and second expected payout may indicate that the occupant 109 is larger than if the first expected payout and the second expected payout are relatively shorter. Furthermore, a first expected payout and a second expected payout associated with a certain size and/or shape of the occupant 109 may also be associated with a certain position (e.g., shape) of the restraint 110. For example, a longer first expected payout and second expected payout may be associated with a position of the restraint 110 that extends further from the seat base 106 and the seat back 108 than a shorter first expected payout and second expected payout (e.g., a longer expected payout may be associated with an adult and a shorter expected payout may be associated with a child, a longer expected payout may be associated with an adult male and a shorter expected payout may be associate with an adult female, etc.).

In some implementations, the controller 140 is configured to determine a first actual position reflection pattern based on the pattern of infrared waves reflected off of the first webbing 112 and received by the infrared receiver 132. The controller 140 may also be configured to determine a second actual position reflection pattern based on the pattern of infrared waves reflected off of the second webbing 114 and received by the infrared receiver 132. The controller 140 may be further configured to compare the actual position of the restraint 110 to the expected position of the restraint 110 based on a difference between the expected position reflection pattern from the restraint 110 and the actual position reflection pattern from the restraint 110 (e.g., the pattern of reflected infrared waves from the first webbing 112 and the second webbing 114). In some embodiments, a difference that is greater than a threshold value may indicate that the restraint 110 is being misused (e.g., mispositioned, not worn, etc.) by the occupant 109. For example, the first and/or second expected position reflection pattern may be a pattern (e.g., a repeating or non-repeating pattern) of an expected length that may correspond to implementations where the occupant 109 wears the restraint 110 correctly. If the controller 140 determines that the actual position is different from the expected position by, for example, more than five percent, ten percent, etc., the controller 140 may determine that the restraint 110 is being misused.

Returning to FIG. 1B, though FIG. 1B shows the infrared reflective material 113 including a circle 144, other arrangements may be implemented. For example, the infrared reflective material 113 may include different shapes in a repeating or non-repeating manner. More specifically, the infrared reflective material 113 may include, for example, the circle 144, a square, a triangle, and an ellipse in a repeating pattern. The infrared reflective material 113 may also include, for example, a non-repeating pattern of shapes along the length of the infrared reflective material 113. In some implementations, the infrared reflective material 113 may include a group of shapes such as the circle 144, a square, a rectangle, a triangle, an ellipse, a rhombus, a pentagon, a hexagon, an octagon, and various other non-geometric shapes that are arranged in a non-repeating manner. Additionally, the non-repeating pattern of shapes may include different sizes of the same shape (e.g., circles with different radii, squares with different side lengths, etc.) In such implementations, the controller 140 may determine an expected reflection pattern based on the signals generated by the first payout sensor 122 and the second payout sensor 124. For example, the controller 140 may determine a size and/or a position of the occupant 109 based on the signals generated by the first payout sensor 122 and the second payout sensor 124 (e.g., a relatively longer actual payout indicates that the occupant 109 is relatively larger and a relatively shorter actual payout indicates that the occupant 109 is relatively shorter). The controller 140 may then determine, based on the size of the occupant 109, the expected infrared reflection pattern. For example, if the infrared reflective material 113 includes a rectangle, a triangle, and an ellipse in succession, the controller 140 may determine that the expected reflection pattern for a larger occupant may include the rectangle, the triangle, and the ellipse. For a shorter occupant, the controller 140 may determine that the expected reflection pattern includes only the rectangle and the triangle (e.g., the ellipse is not exposed because that portion of the infrared reflective material 113 remains within the first retractor 116 or the second retractor 118). In the example in which the non-repeating pattern includes different sizes of the same shape, the controller 140 may determine that the expected reflection pattern includes only certain sizes of the same shape (e.g., circles up to a circle of a certain diameter, squares up to a square with a certain side length, etc.). The expected reflection patterns determined by the controller 140 correspond to the payout and the position of the restraint 110. Accordingly, a non-repeating pattern of the infrared reflective material may be used to determine the payout and the position of the restraint 110.

In some embodiments, vehicle systems (e.g., a steering system, a braking system, a propulsion system, etc.) may modify and/or change an operating state of the vehicle 100 when the restraint 110 is being misused or is being worn incorrectly by the occupant 109. Vehicle systems (e.g., a display system) may also modify and/or change a display viewable by the occupant 109 when the restraint 110 is being misused or is being worn incorrectly by the occupant 109. For example, the controller 140 may determine from the reflected infrared waves when the restraint 110 is worn incorrectly by the occupant 109. More specifically, the controller 140 may determine that the restraint 110 is being misused or worn incorrectly when the actual position of the restraint 110 does not approximately match (e.g., within five percent of an exact match, within ten percent of an exact match, etc.) the expected position of the restraint 110. The controller 140 may also determine that the restraint 110 is being misused or worn incorrectly when the actual payout or actual payout reflection pattern does not match the expected payout or expected payout reflection pattern. Based on the determination of the controller 140, a steering system, a braking system, a propulsion system, etc., may prevent the vehicle 100 from shifting to a propulsion mode when the vehicle 100 is parked. If the vehicle 100 is in motion, a display system may notify the occupant 109 of the misuse of the restraint 110. The various systems of the vehicle 100 may also change the operating state of the vehicle 100 to move the vehicle 100 to a side of the road and prompt the occupant 109 to use the restraint 110 correctly.

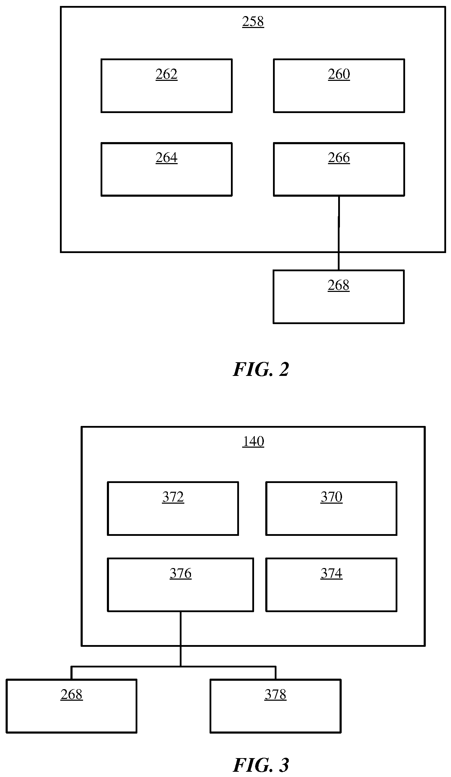

FIG. 2 is a schematic block diagram of a sensor device 258, according to an implementation. In some implementations, the sensor device 258 is an infrared sensor device that includes an infrared illumination source (e.g., the infrared illumination source 130) and an infrared receiver (e.g., the infrared receiver 132). The sensor device 258 is shown to include a transmitter 260, a receiver 262, a power supply 264, and a controller 266. In some implementations, the controller 266 is electronically coupled with a display 268.

The transmitter 260 is configured to generate infrared waves and direct the infrared waves into the cabin 103. The receiver 262 is configured to receive the infrared waves that are reflected off the infrared reflective material 113 located in the cabin 103. For example, the receiver 262 may receive infrared waves reflected off of the infrared material in the restraint 110. The power supply 264 is configured to provide power to the sensor device 258 for the transmitter 260, the receiver 262, and the controller 266. In some embodiments, the power supply 264 is dedicated to the sensor device 258 (e.g., the power supply 264 does not provide power to other devices or systems within the vehicle 100). In some implementations, the power supply 264 is part of another system of the vehicle 100 and is electrically coupled with the sensor device 258 to provide power to the sensor device 258. The display 268 may be located within the cabin 103 of the vehicle 100 and may be configured to provide information (e.g., notifications, warnings, etc.) to the occupant 109.

FIG. 3 is a schematic block diagram of the controller 140, according to an implementation. The controller 140 may be used to implement the systems and methods disclosed herein. In some implementations, the controller 140 may be a separate controller, microprocessor, or microcontroller (e.g., not located in or on the vehicle), or may be implemented on the cloud. The controller 140 may also be part of an onboard vehicle controller. For example, the controller 140 may receive signals from sensors 378 and communicate with systems of the vehicle 100. In an example hardware configuration, the controller 140 generally includes a processor 370, a memory 372, a storage 374, and a communication interface 376. Data and/or signals received from the sensors 378 may include signals related to infrared waves reflected from the infrared material of the restraint 110, signals related to motion of the restraint 110, signals related to forces imparted to the restraint 110, etc. The processor 370 may be any suitable processor, such as a central processing unit, for executing computer instructions and performing operations described thereby. The memory 372 may be a volatile memory, such as random-access memory (RAM). The storage 374 may be a non-volatile storage device, such as a hard disk drive (HDD) or a solid-state drive (SSD). The storage 374 may form a computer readable medium that stores instructions (e.g., code) executed by the processor 370 for operating external devices in the manners described above and below. The communication interface 376 is in communication with, for example, the display 268 and the sensors 378 for sending to and receiving from various signals (e.g., control signals and/or notifications). The controller 140 may also be in communication with external devices that may include, for example, systems or devices through which the occupant 109 may provide information to the controller 140. For example, the external devices may include devices such as a mobile device, a tablet computer, or other electronic devices that may communicate with the controller 140. Accordingly, the controller 140 may include an Internet connection to facilitate communication between the controller 140 and the external devices.

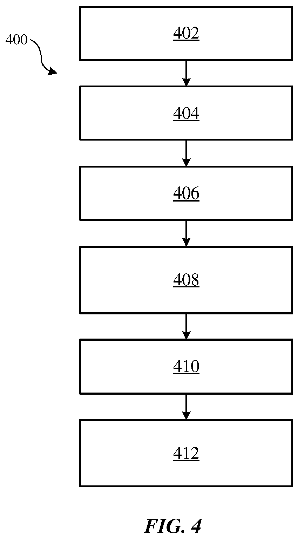

FIG. 4 is a flowchart of a method 400 for detecting motion and location of a restraint (e.g., the restraint 110), according to an implementation. The method 400 can be implemented at least in part by the controller 140. At operation 402, components are detected. For example, the vehicle 100 may include one or more sensors that generate a signal associated with the occupant 109 sitting on the seat 104. The sensors may include a force sensor (e.g., to detect the force of the occupant 109 sitting on the seat 104), a camera (e.g., to show the occupant 109 sitting on the seat 104 visually), or any other type of sensor configured to generate a signal associated with the occupant 109 sitting on the seat 104. The signal is directed to the controller 140, which interprets the signal and determines whether the occupant 109 is sitting on the seat 104. In some implementations, the controller 140 determines a shape and/or size of the occupant 109 based on the signal.

At operation 404, the motion of the restraint 110 is determined. For example, the controller 140 may determine the payout of the restraint 110 based on the signals received from the first payout sensor 122 and the second payout sensor 124. The controller 140 may also determine the payout of the restraint 110 based on the infrared waves reflected off of the infrared reflective material 113 of the restraint 110.

At operation 406, the position of the restraint 110 is determined. For example, the controller 140 may determine the position of the restraint 110 based on the pattern of infrared waves reflected off of the infrared reflective material 113 of the restraint 110.

At operation 408, the position and motion of the restraint 110 is monitored. For example, the controller 140 may make an initial determination that the restraint 110 is worn correctly by the occupant 109 prior to the vehicle 100 moving (e.g., upon the occupant 109 entering the vehicle 100). After making the initial determination that the restraint 110 is being worn correctly, the vehicle 100 is allowed to move normally. In implementations where the controller 140 makes an initial determination that the restraint 110 is not being worn correctly by the occupant 109, the vehicle 100 is not allowed to move until the occupant 109 wears the restraint 110 correctly. After the controller 140 makes the initial determination, the controller 140 continues to monitor signals from the various sensors that generate signals indicating whether the restraint 110 is being worn correctly.

At operation 410, an operating state of the vehicle 100 is changed if misuse of the restraint 110 is detected. For example, the controller 140 may determine that the occupant 109 is misusing the restraint 110 (e.g., wrapping the first webbing 112 around the back of the seat back 108, unbuckling the restraint 110, etc.). After determining that the restraint 110 is being misused, the operating state of the vehicle 100 is changed. Changing the operating state of the vehicle 100 may include the vehicle 100 slowing down, pulling over to a side of the road, not being allowed to move after coming to a stop (e.g., at a stoplight, a stop sign, etc.), limiting the speed at which the vehicle 100 can move, limiting availability of entertainment options (e.g., radio, video, etc.), etc. Changing the operating state of the vehicle 100 may also include the vehicle 100 moving up and down in an oscillatory fashion (e.g., a suspension system of the vehicle may alternately move opposite portions of the vehicle 100 up and down), the vehicle moving side to side in an oscillatory fashion (e.g., the steering system may alternately turn the wheels of the vehicle 100 from side to side), etc. Additional ways to change the operating state of the vehicle 100 may also be implemented.

At operation 412, a notification is generated if misuse of the restraint 110 is detected. For example, the display 268 notifies the occupant 109 of the misuse of the restraint 110. The notification may include a visual alert. For example, the visual alert may include an image that shows how the restraint 110 is being misused (e.g., a cartoon image showing the restraint 110 in a misused position and a correct position, an image of the occupant 109 showing the occupant 109 wearing the restraint 110 incorrectly and an image of the occupant 109 showing the occupant 109 wearing the restraint correctly, etc.). The visual alert may also include flashing lights (e.g., lights of different colors, brightness, etc.). The controller 140 may also communicate with an audio system of the vehicle 100 such that the audio system provides an audio alert to the occupant 109 (e.g., an alarm that beeps, a voice that tells the occupant 109 that the restraint 110 is being misused, instructions that notify the occupant 109 how to correctly position the restraint 110, etc.). A haptic system of the vehicle 100 may also provide a haptic vibration to the occupant 109 (e.g., a vibration of the seat 104, a vibration of the restraint 110, a vibration of a console that the occupant 109 touches, etc.).

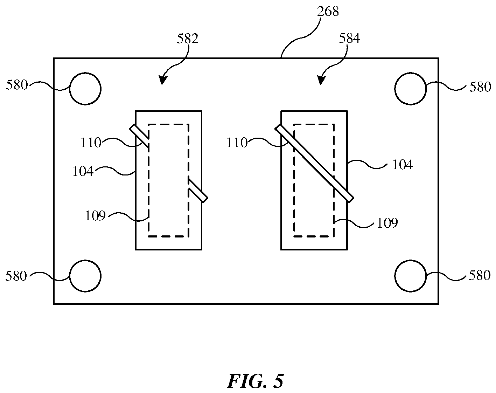

FIG. 5 is an illustration of the display 268 of the vehicle 100. The display 268 is shown to include lights 580 that are configured to flash to provide a visual alert to the occupant 109. The display 268 also includes a first image 582 of the occupant 109 wearing the restraint 110 incorrectly. For example, the occupant 109 may have placed the restraint 110 between the occupant 109 and the seat 104, and the first image 582 shows the restraint 110 in that location. The display 268 includes a second image 584 of the occupant 109 wearing the restraint 110 correctly. For example, the second image 584 may show the occupant 109 in between the restraint 110 and the seat 104 to prompt the occupant 109 to wear the restraint 110 correctly. In some embodiments, the first image 582 and the second image 584 are rendered images such as cartoons, stick figures, etc. The first image 582 and the second image 584 may also include actual images of the occupant 109, the seat 104, and the restraint 110 taken by, for example, a visible light camera in the cabin 103.

As described above, one aspect of the present technology is the gathering and use of data available from various sources during use of a restraint system for a vehicle. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

In some implementations, an expected payout reflection pattern from the restraint differs from an actual payout reflection pattern from the restraint. The expected payout reflection pattern may be a predetermined pattern of an expected length.

In some implementations, the position of the restraint is compared to an expected position based on a difference between an expected position reflection pattern from the restraint and an actual position reflection pattern from the restraint. An operating state of the vehicle may be changed when the position of the restraint does not match the expected position.

In some implementations, the material includes an infrared reflective material woven into the material of the restraint. The infrared reflective material may be woven into the material of the restraint in a non-repeating pattern that is used to determine the payout and the position of the restraint.

Implementations described herein may also be directed to a restraint detection system that includes an infrared illumination source positioned in an interior space of a vehicle and configured to illuminate the interior space with infrared waves. A camera may be configured to receive infrared waves reflected from an infrared reflective material located within the interior space as an actual reflected wave pattern. A payout and a position of the restraint may be determined based on the actual reflected wave pattern.

In some implementations, the actual reflected wave pattern may be compared to a predetermined pattern to determine an actual payout of the restraint. An expected payout of the restraint may be compared to the actual payout of the restraint to determine when the restraint is misused. An operating state of the vehicle may be configured to change when the actual payout of the restraint indicates that the restraint is misused.

In some implementations, the camera may be configured to receive infrared waves reflected from a body of an occupant, and a body position of the occupant may be determined based on the received infrared waves.

In some implementations, an expected position of the restraint may be determined based on the expected reflected wave pattern and an actual position of the restraint based on the actual reflected wave pattern. A difference between the actual position of the restraint and the expected position of the restraint indicates that the restraint is mispositioned.

Implementations described herein may also be directed to a vehicle including a vehicle body that defines a cabin. A restraint may be coupled to the vehicle body and may be configured to restrain an occupant within the cabin. The restraint may include an infrared reflective material oriented in a predetermined pattern. An infrared source may be coupled to the vehicle body and be positioned within the cabin to illuminate the cabin with infrared waves. An infrared receiver may be coupled to the vehicle body and be positioned within the cabin to receive reflected infrared waves from the infrared reflective material of the restraint. A position of the restraint may be determined based on the infrared waves reflected from the infrared reflective material.

In some implementations, a determination that the restraint is worn incorrectly by the occupant is made based on the reflected infrared waves. An operating state of the vehicle may be configured to change when the restraint is worn incorrectly by the occupant.

In some implementations, the position of the restraint is determined based on a determination that an actual position of the restraint based on the reflected infrared waves is different from an expected position of the restraint when the restraint is worn correctly because the reflected infrared waves do not correspond to an expected infrared reflection pattern.

In some implementations, the vehicle includes a payout sensor configured to generate a signal indicative of a payout of the restraint. A notification may be provided to the occupant when an actual payout of the restraint is different from an expected payout of the restraint. The notification may be one or more of a visual alert, an audio alert, and a haptic vibration of the restraint. The visual alert may include an image of the occupant wearing the restraint incorrectly and an image of the occupant wearing the restraint correctly.

As described above, one aspect of the present technology is the gathering and use of data available from various sources during use of a restraint system for a vehicle. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference information related information that allows notification of misuse of a restraint. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for user preference information related to notifications of misuse of a restraint, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the restraint system is used, such as by entering the user preference information manually, and without subsequently storing the information or associating with the particular user.

Some exemplary embodiments of the present disclosure are set out in the following items and articles:

### Items

1. A restraint system for a vehicle, comprising:
   a restraint comprising a material that reflects infrared waves that are transmitted from an infrared source and is received by an infrared receiver; and
   a controller configured to determine a payout and a position of the restraint based on the infrared waves reflected from the material of the restraint.
2. The restraint system of item 1, wherein the controller is further configured to determine a difference between an expected payout reflection pattern from the restraint and an actual payout reflection pattern from the restraint.
3. The restraint system of item 2, wherein the expected payout reflection pattern is a predetermined pattern of an expected length.
4. The restraint system of any of items 1-3, wherein the controller is further configured to compare the position of the restraint to an expected position based on a difference between an expected position reflection pattern from the restraint and an actual position reflection pattern from the restraint.
5. The restraint system of item 4, wherein the controller is further configured to communicate with vehicle systems such that an operation of the vehicle is changed when the position of the restraint does not match the expected position.
6. The restraint system of any of items 1-5, wherein the material comprises an infrared reflective material woven into the material of the restraint.
7. The restraint system of item 6, wherein the infrared reflective material is woven into the material of the restraint in a non-repeating pattern that is used to determine the payout and the position of the restraint.
8. A restraint detection system, comprising:
   an infrared illumination source positioned in an interior space of a vehicle and configured to illuminate the interior space with infrared waves;
   a camera configured to receive infrared waves reflected from an infrared reflective material located within the interior space, wherein the infrared waves are received by the camera as an actual reflected wave pattern; and
   a controller configured to determine a payout and a position of the restraint based on the actual reflected wave pattern.
9. The restraint detection system of item 8, wherein the controller is configured to compare the actual reflected wave pattern to a predetermined pattern to determine an actual payout of the restraint.
10. The restraint detection system of item 9, wherein the controller is configured to compare an expected payout of the restraint to the actual payout of the restraint to determine when the restraint is misused.
11. The restraint detection system of item 10, wherein the controller is configured to change an operating condition of the vehicle when the actual payout of the restraint indicates that the restraint is misused.
12. The restraint detection system of any of items 8-11, wherein the camera is configured to receive infrared waves reflected from the body of an occupant, and the controller is configured to determine a body position of the occupant based on the received infrared waves.
13. The restraint detection system of any of items 8-12, wherein the controller is configured to determine an expected position of the restraint based on the expected reflected wave pattern and an actual position of the restraint based on the actual reflected wave pattern.
14. The restraint detection system of item 13, wherein the controller is configured to determine that the restraint is mispositioned based on a difference between the actual position of the restraint and the expected position of the restraint.
15. A vehicle, comprising:
   a vehicle body that defines a cabin;
   a restraint coupled to the vehicle body and configured to restrain an occupant within the cabin, the restraint comprising an infrared reflective material oriented in a predetermined pattern;
      an infrared source coupled to the vehicle body and positioned within the cabin to illuminate the cabin with infrared waves;
      an infrared receiver coupled to the vehicle body and positioned within the cabin to receive reflected infrared waves from the infrared reflective material of the restraint; and
   a controller configured to determine a position of the restraint based on the infrared waves reflected from the infrared reflective material.
16. The vehicle of item 15, wherein the controller is further configured to determine from the reflected infrared waves when the restraint is worn incorrectly by the occupant.
17. The vehicle of item 16, wherein the controller is further configured to change an operating state of the vehicle when the restraint is worn incorrectly by the occupant.
18. The vehicle of any of items 15-17, wherein the controller is configured determine the position of the restraint based on a determination that an actual position of the restraint based on the reflected infrared waves is different from an expected position of the restraint when the restraint is worn correctly because the reflected infrared waves do not correspond to an expected infrared reflection pattern.
19. The vehicle of any of items 15-18, further comprising a payout sensor configured to generate a signal indicative of a payout of the restraint, wherein the controller is further configured to determine when an actual payout of the restraint is different from an expected payout of the restraint and provide a notification to the occupant, and the notification is one or more of a visual alert, an audio alert, and a haptic vibration of the restraint.
20. The vehicle of item 19, wherein the visual alert includes an image of the occupant wearing the restraint incorrectly and an image of the occupant wearing the restraint correctly.

### Articles

1. A restraint system for a vehicle, comprising:
   a restraint comprising a material that reflects infrared waves that are transmitted from an infrared source and is received by an infrared receiver;
   wherein a payout and a position of the restraint is determined based on the infrared waves reflected from the material of the restraint.
2. The restraint system of article 1, wherein an expected payout reflection pattern from the restraint differs from an actual payout reflection pattern from the restraint.
3. The restraint system of article 2, wherein the expected payout reflection pattern is a predetermined pattern of an expected length.
4. The restraint system of any of articles 2-3, wherein the expected payout reflection pattern is compared to the actual payout reflection pattern to determine when the restraint is misused.
5. The restraint system of any of articles 2-4, wherein an operating state of the vehicle is changed when the actual payout reflection pattern indicates that the restraint is misused.
6. The restraint system of any of articles 1-5, wherein the position of the restraint is compared to an expected position based on a difference between an expected position reflection pattern from the restraint and an actual position reflection pattern from the restraint.
7. The restraint system of article 6, wherein a difference between the position of the restraint and the expected position indicates that the restraint is mispositioned.
8. The restraint system of any of articles 6-7, wherein an operating state of the vehicle is changed when the position of the restraint does not match the expected position.
9. The restraint system of any of articles 1-8, wherein the material comprises an infrared reflective material woven into the material of the restraint.
10. The restraint system of article 9, wherein the infrared reflective material is woven into the material of the restraint in a non-repeating pattern that is used to determine the payout and the position of the restraint.
11. The restraint system of any of articles 9-10, wherein the infrared reflective material (113) is woven into the material of the restraint in a first pattern and a second pattern, wherein the second pattern is different that the first pattern.
12. The restraint system of any of articles 1-11, wherein the infrared receiver is configured to receive infrared waves reflected from a body of an occupant, and a body position of the occupant is determined based on the infrared waves.
13. The restraint system of any of articles 1-12, wherein a notification is provided to an occupant when an actual payout of the restraint is different from an expected payout of the restraint, and the notification is one or more of a visual alert, an audio alert, and a haptic vibration of the restraint.
14. The restraint system of article 13, wherein the visual alert includes an image of the occupant wearing the restraint incorrectly and an image of the occupant wearing the restraint correctly.
15. The restraint system of any of articles 1-14, wherein the position of the restraint is determined based on a determination that an actual position of the restraint based on the reflected infrared waves is different from an expected position of the restraint when the restraint is worn correctly because the reflected infrared waves do not correspond to an expected infrared reflection pattern.

## Claims

1. A restraint system for a vehicle, comprising:
a restraint comprising a material that reflects infrared waves that are transmitted from an infrared source and is received by an infrared receiver;
wherein a payout and a position of the restraint is determined based on the infrared waves reflected from the material of the restraint.

2. The restraint system of claim 1, wherein an expected payout reflection pattern from the restraint differs from an actual payout reflection pattern from the restraint.

3. The restraint system of claim 2, wherein the expected payout reflection pattern is a predetermined pattern of an expected length.

4. The restraint system of any of claims 2-3, wherein the expected payout reflection pattern is compared to the actual payout reflection pattern to determine when the restraint is misused.

5. The restraint system of any of claims 2-4, wherein an operating state of the vehicle is changed when the actual payout reflection pattern indicates that the restraint is misused.

6. The restraint system of any of claims 1-5, wherein the position of the restraint is compared to an expected position based on a difference between an expected position reflection pattern from the restraint and an actual position reflection pattern from the restraint.

7. The restraint system of claim 6, wherein a difference between the position of the restraint and the expected position indicates that the restraint is mispositioned.

8. The restraint system of any of claims 6-7, wherein an operating state of the vehicle is changed when the position of the restraint does not match the expected position.

9. The restraint system of any of claims 1-8, wherein the material comprises an infrared reflective material woven into the material of the restraint.

10. The restraint system of claim 9, wherein the infrared reflective material is woven into the material of the restraint in a non-repeating pattern that is used to determine the payout and the position of the restraint.

11. The restraint system of any of claims 9-10, wherein the infrared reflective material (113) is woven into the material of the restraint in a first pattern and a second pattern, wherein the second pattern is different that the first pattern.

12. The restraint system of any of claims 1-11, wherein the infrared receiver is configured to receive infrared waves reflected from a body of an occupant, and a body position of the occupant is determined based on the infrared waves.

13. The restraint system of any of claims 1-12, wherein a notification is provided to an occupant when an actual payout of the restraint is different from an expected payout of the restraint, and the notification is one or more of a visual alert, an audio alert, and a haptic vibration of the restraint.

14. The restraint system of claim 13, wherein the visual alert includes an image of the occupant wearing the restraint incorrectly and an image of the occupant wearing the restraint correctly.

15. The restraint system of any of claims 1-14, wherein the position of the restraint is determined based on a determination that an actual position of the restraint based on the reflected infrared waves is different from an expected position of the restraint when the restraint is worn correctly because the reflected infrared waves do not correspond to an expected infrared reflection pattern.
